# EUROPEAN PATENT APPLICATION

(11) **EP 4 403 919 A1**
(43) Date of publication of application: **24.07.2024**
(21) Application number: 22869868.4
(22) Date of filing: 07.09.2022
(51) Int. Cl.: G01N 35/00

(54) **AUTOANALYZER AND AUTOANALYSIS SYSTEM**

(30) Priority: 15.09.2021 JP 2021150085
(71) Applicant: HITACHI HIGH-TECH CORPORATION, Tokyo 105-6409 (JP)
(72) Inventor: TAKEUCHI Miwa, Tokyo 105-6409 (JP); IMAI Kenta, Tokyo 105-6409 (JP); ITAGAKI Yuto, Tokyo 105-6409 (JP)
(74) Representative: MERH-IP Matias Erny Reichl Hoffmann Patentanwälte PartG mbB
(86) International application number: PCT/JP2022/033515
(87) International publication number: WO 2023/042721

(57) **Abstract**

The purpose of the present invention is to provide an automatic analyzer and automatic analysis system with improved convenience for the user. To that end, the present invention includes a first automatic analyzer that is provided with a storage unit for storing a sample used for calibration or quality management, and a second automatic analyzer; the first automatic analyzer comprises a first analysis unit which performs analysis using the sample stored in the storage unit, and an ejection unit which ejects the sample stored in the storage unit, and the second automatic analyzer has a second analysis unit which performs analysis using the sample ejected by the ejection unit.

## Description

### Technical Field

The present invention relates to an automatic analyzer and an automatic analysis system comprised of a plurality of automatic analyzers.

### Background Art

In a conventional ordinary automatic analyzer, prior to making measurement of a general sample, the operator must perform calibration and measurement for quality control at an adequate frequency and confirm that the result is adequate. Therefore, for the purpose of reducing the workload on the operator relating to calibration and quality control, the demand to automate calibration and quality control is growing. In order to meet this demand, Patent Literature 1 proposes an automatic analyzer that is provided with an auto QC unit which performs calibration and quality control automatically.

### Citation List

### Patent Literature

PTL 1: Japanese Unexamined Patent Application Publication No. 2013-24691

### Summary of Invention

### Technical Problem

However, the auto QC unit of the automatic analyzer described in Patent Literature 1 or the like stores the sample to be used for calibration or quality control in the own automatic analyzer and is not assumed to store the sample to be used for calibration or quality control in another analyzer. However, in the recent years, automatic analyzers are increasingly diversified in terms of type and layout and it is difficult that the auto QC unit designed to be exclusively used for the own analyzer contributes to improvement in convenience for the user.

The object of the present invention is to provide an automatic analyzer and automatic analysis system with improved convenience for the user.

### Solution to Problem

In order to achieve the above object, in the present invention, there is provided a first automatic analyzer including a storage unit for storing a sample used for calibration or quality control, and a second automatic analyzer. The first automatic analyzer includes: a first analysis unit which performs analysis using the sample stored in the storage unit; and an ejection unit which ejects the sample stored in the storage unit, and the second automatic analyzer includes a second analysis unit which performs analysis using the sample ejected by the ejection unit.

### Advantageous Effects of Invention

According to the present invention, an automatic analyzer and automatic analysis system with improved convenience for the user can be provided.

### Brief Description of Drawings

Fig. 1 is a layout drawing that shows the general configuration of an automatic analysis system according to an embodiment of the present invention.
Fig. 2 is a schematic diagram of the automatic analyzer according to the first embodiment.
Fig. 3a is an example of a sample registration screen.
Fig. 3b is an example of a setting screen for preparation of a sample in the auto QC unit.
Fig. 4a is an example of an ejection destination setting screen for the rack where the QC sample is loaded.
Fig. 4b is an example of a manual setting screen for the ejection destination.
Fig. 5 is a schematic diagram of the automatic analyzer according to the second embodiment.
Fig. 6a is an example of a sample ejection timing setting screen.
Fig. 6b is an example of a manual setting screen for ejection timing.
Fig. 7 is a schematic diagram of the automatic analyzer according to the third embodiment.
Fig. 8a is an example of a screen that notifies of completion of sample measurement and the line to which the sample is ejected.
Fig. 8b is an example of a screen that notifies of completion of sample measurement and the sample ejection time.
Fig. 9a is an example of a screen that shows the sample storage position in the auto QC unit.
Fig. 9b is an example of a screen that gives an error warning.
Fig. 10 is an example of a disposal setting screen for the sample stored in the auto QC unit.
Fig. 11a is a graph that shows measurement results of the sample used in a plurality of automatic analyzers.
Fig. 11b is an example of a screen that notifies of variation in measured values.
Fig. 12 is an example of an approval screen for the results of measurement in each automatic analyzer.

### Description of Embodiments

Hereinafter, according to an embodiment of the present invention, an automatic analyzer for clinical examination and an automatic analysis system comprised of a plurality of automatic analyzers will be described referring to drawings.

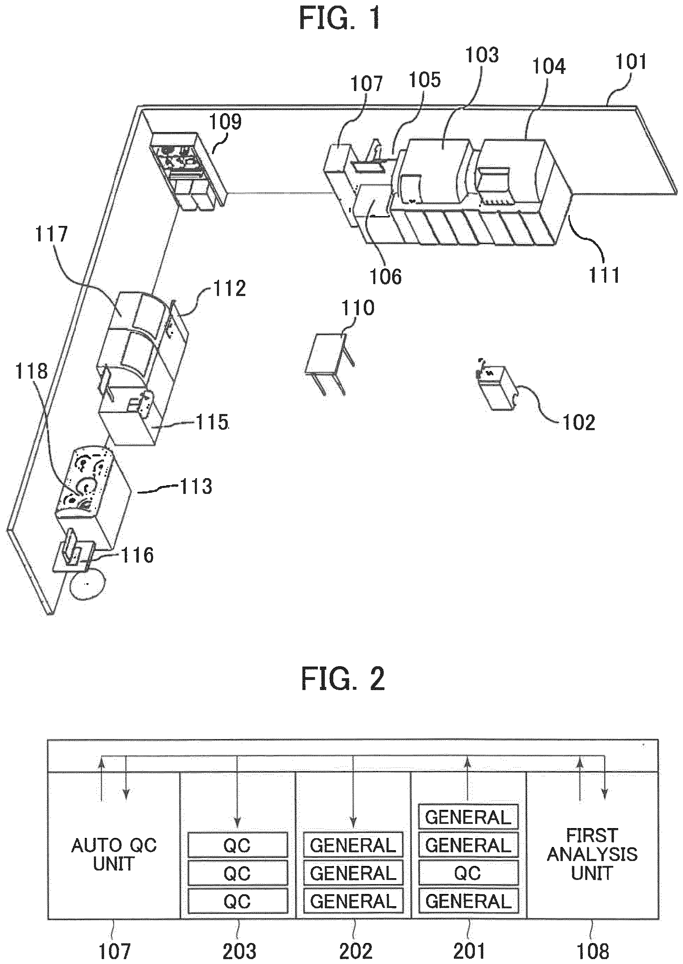

First, the automatic analysis system comprised of a plurality of automatic analyzers will be described referring to Fig. 1. Fig. 1 is a layout drawing that shows the general configuration of the automatic analysis system according to the embodiment.

As shown in Fig. 1, an automatic analyzer 112 and an automatic analyzer 113 as well as an automatic analyzer 111 are installed in an automatic analysis area 101. Although the automatic analysis area in Fig. 1 includes equipment shelves 109, a working table 110, and an autonomous moving body 102, these are not indispensable and for example, the autonomous moving body 102 is used only in an embodiment which will be described later.

In each automatic analyzer, the following procedure is used to make quantitative analysis of a specific component of a biological sample such as blood.

### (1) Starting up the analyzer

Necessary preparations such as periodical maintenance are carried out.

### (2) Calibration

Several types of standard samples whose concentration of a component as an analysis object is known are measured and a relational expression (calibration curve) of the concentration of the analysis object component and the signal quantity obtained as a measurement result is created. This calibration step is carried out, for example, every month or so.

### (3) Quality Control measurement (QC measurement)

Several types of quality control samples whose concentration range of the analysis object component is known are measured and the concentration is calculated using the calibration curve. By checking whether the calculated concentration is within the known concentration range, it is confirmed that the calibration curve created by calibration is adequate. This QC measurement is made, for example, three times a day.

### (4) Measurement of a general sample

A sample whose concentration of the analysis object component is not known is measured and the concentration is calculated using the calibration curve.

### (5) Shutting down the analyzer

Necessary shutting-down tasks such as cleaning and inspection are carried out.

Among these tasks, calibration and quality control are automatically performed. In other words, the introduction of the auto QC can reduce the workload on the operator and achieve reliable calibration and quality control.

The automatic analyzer 111 is an automatic analyzer with an auto QC unit (first automatic analyzer) and includes a first analysis unit 103, a second analysis unit 104, a control unit 105, an input/ejection unit 106 and an auto QC unit 107 (storage unit). The input/ejection unit 106 enables input and ejection of a sample. The auto QC unit 107 automatically prepares the sample to make it usable for calibration and quality control and also stores it, or simply stores the sample to be used for calibration or quality control. For example, the QC sample prepared/stored by the auto QC unit 107 is transported to the first analysis unit 103 or the second analysis unit 104 and used in QC measurement, then again transported to the auto QC unit 107 and stored.

On the other hand, the automatic analyzer 112 and automatic analyzer 113 are automatic analyzers (second automatic analyzers) that are not provided with an auto QC unit, from the viewpoint of installation space and cost. The automatic analyzer 112 includes a control unit 115 and an analysis unit 117 (second analysis unit), and the automatic analyzer 113 includes a control unit 116 and an analysis unit 118 (second analysis unit), but they are smaller and simpler than the automatic analyzer 111. Since the automatic analyzer 112 and the automatic analyzer 113 cannot prepare and store a standard sample or QC sample, the auto QC unit 107 of another analyzer, namely the automatic analyzer 111 is used. Hereinafter, the method of making the standard sample or QC sample prepared/stored by the automatic analyzer 111 usable in the automatic analyzer 112 and the automatic analyzer 113 will be explained according to several embodiments.

### First Embodiment

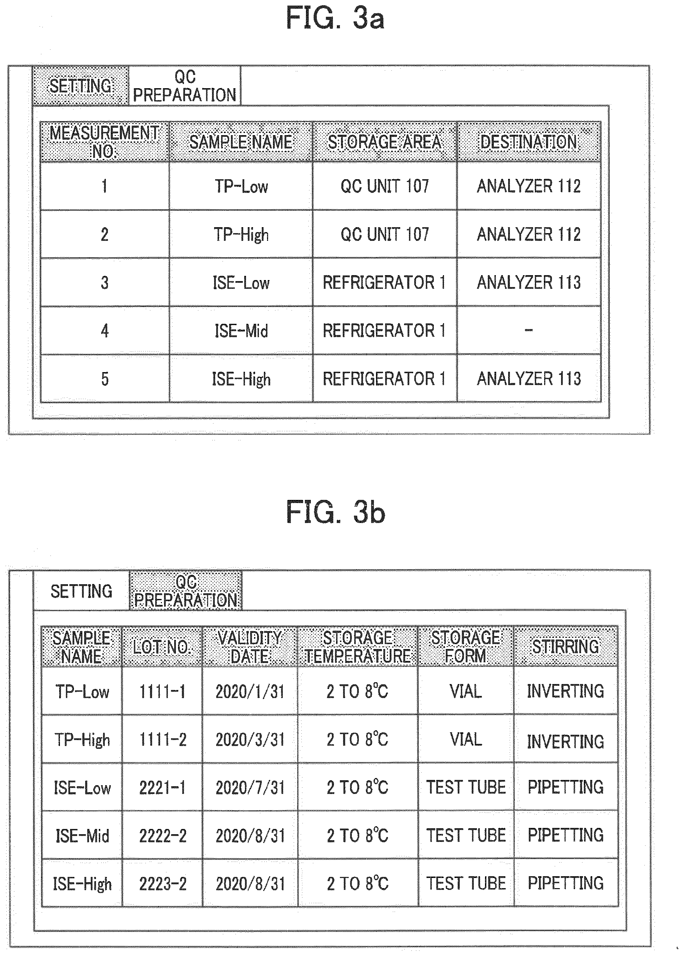

Next, the first embodiment will be described referring to Fig. 2 to Fig. 4b. Fig. 2 is a schematic diagram of the automatic analyzer according to the first embodiment. Fig. 3a is an example of a sample registration screen. Fig. 3b is an example of a setting screen for preparation of a sample in the auto QC unit 107.

As shown in Fig. 2, the automatic analyzer 111 includes an auto QC unit 107, a first analysis unit 108, a sample input unit 201, a first ejection line 202, and a second ejection line 203. Here, the first analysis unit 108 corresponds to the first analysis unit 103 and second analysis unit 104 in Fig. 1. The sample input unit 201, first ejection line 202 and second ejection line 203 correspond to the input/ejection unit 106 in Fig. 1.

The operator (user) inputs not only general samples, but also standard samples and QC samples (hereinafter called QC samples) in the sample input unit 201. For example, the general sample which has been input in the sample input unit 201 is transported to the first analysis unit 108 and after it is used for analysis in the first analysis unit 108, it is transported to the first ejection line 202. The QC sample which has been input in the sample input unit 201 is transported to the auto QC unit 107 or the second ejection line 203.

Among the QC samples prepared/stored in the auto QC unit 107, some are transported to the second ejection line 203 for supply to the automatic analyzer 112 or automatic analyzer 113 and some others are transported to the first analysis unit 108 and used for QC measurement, etc. If the QC samples used for QC measurement, etc. in the first analysis unit 108 are stored again, the QC samples are again transported to the auto QC unit 107.

In this way, the auto QC unit 107 of the automatic analyzer 111 can store not only the QC samples for use by the automatic analyzer 111 itself, but also the QC samples for use by other automatic analyzers. Therefore, the user can previously register the destination of transportation of each sample prepared/stored by the auto QC unit 107 through the control unit 105. If there is a storage area (for example, a refrigerator 1) other than the auto QC unit 107, a storage area and an automatic analyzer as the destination may be specified for each sample as shown in Fig. 3a. Fig. 3a shows a list of registered samples. It is possible to change the registered content, add a new sample and delete a sample, using the edit button or the like (not shown) .

Furthermore, the operator can set the method of preparing and storing a QC sample in the auto QC unit 107 as appropriate on the screen shown in Fig. 3b. Fig. 3b shows the preparation and storage method that has been set for each sample. The set content can be changed using the edit button, etc. (not shown). The setting means includes not only an entry by the user but also an automatic entry by a reader which reads the barcode attached to the sample container, IC chip, RFID or the like.

In addition to the sample name, lot number, validity date, storage temperature, storage form, and stirring method as shown in Fig. 3b, for example, information such as the type of solution, the amount of added solution, and the date of dissolution is displayed on the screen of the auto QC unit 107 and stored in the memory of the control unit 105. Here, as the storage form, a vial or a test tube can be selected. Also, the type of solution to be used for preparation can be selected from among various options including the system water used in the automatic analyzer, the solution supplied as a package deal, water specially supplied by the autonomous moving body or user, and the water provided for QC samples. As the method of stirring a QC sample, pipetting with a stirring stick or disposable tip, or inverting can be selected.

In this embodiment, the ejection destination of the general sample used for analysis by the first analysis unit 108 of the automatic analyzer 111 is different from the ejection destination of the QC sample for use in QC measurement in the second analysis unit of the automatic analyzer 112 or the automatic analyzer 113. Therefore, the sample as an object can be easily picked up. The sample may be picked up by the user such as the operator or by the autonomous moving body such as a robot or an automatic transportation device. If the operator picks up a general sample and the autonomous moving body picks up a QC sample, the first ejection line 202 as the ejection destination of the general sample may be designed to be exclusively used by the operator, and the second ejection line 203 as the ejection destination of the QC sample may be designed to be exclusively used by the autonomous moving body.

In this embodiment, it is assumed that not only the QC sample for use in the automatic analyzer 112 but also the QC sample for use in the automatic analyzer 113 are ejected to the second ejection line 203. However, instead the QC samples that are used by various automatic analyzers may be ejected to different ejection lines.

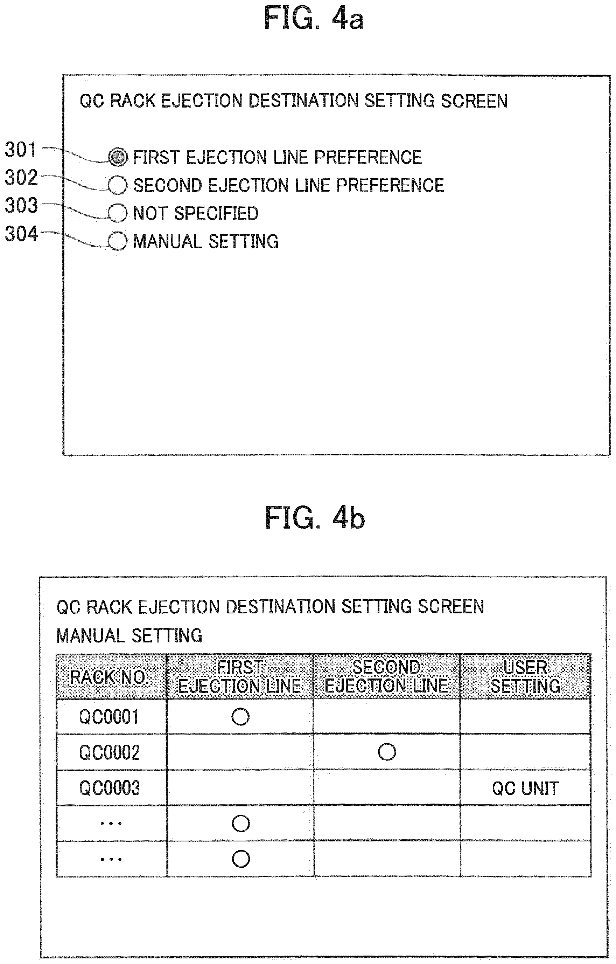

Furthermore, in this embodiment, samples are automatically ejected to different ejection lines according to the type of sample and the destination of transportation, but details of the ejection method can be specified by the user as appropriate. Fig. 4a is an example of the ejection destination setting screen for the rack where the QC sample is loaded and Fig. 4b is an example of the manual setting screen for the ejection destination.

On the ejection destination setting screen shown in Fig. 4a, the ejection method can be selected using a plurality of radio buttons. If the first ejection line preference button 301 is selected, the sample is preferentially ejected to the first ejection line 202. Similarly, if the second ejection line preference button 302 is selected, the sample is preferentially ejected to the second ejection line 203. If the NOT SPECIFIED button 303 is selected, the sample is ejected to a vacant ejection line or an ejection line suitable for the condition of the analyzer. If the manual setting button 304 is selected, the manual setting screen as shown in Fig. 4b appears and the user can specify the ejection destination for each sample.

### Second Embodiment

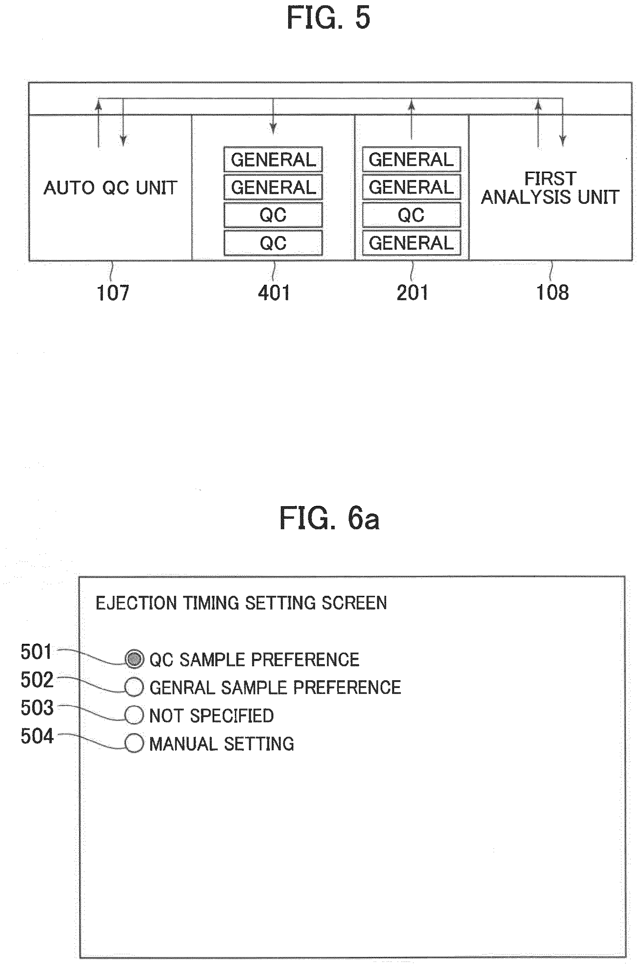

Next, the second embodiment will be described referring to Fig. 5 to Fig. 6b. Fig. 5 is a schematic diagram of the automatic analyzer 111 according to the second embodiment. Whereas in the first embodiment the type of sample and the destination of transportation are determined for each ejection line, in the second embodiment the timing of ejection to the ejection line differs depending on the type of sample or the destination of transportation.

As shown in Fig. 5, the automatic analyzer 111 according to the second embodiment includes an auto QC unit 107, a first analysis unit 108, a sample input unit 201, and an ejection line 401. Unlike the first embodiment, the second embodiment includes only one ejection line. In this embodiment, the time slot to eject the QC sample to be used for QC measurement by the automatic analyzer 112 or automatic analyzer 113 is made different from the time slot to eject the general sample used for analysis by the automatic analyzer 111. For example, a QC sample is ejected to the ejection line 401 at 7:00 and the first analysis unit 108 ejects a general sample to the ejection line 401 at 8:00. Consequently, even in the ejection line structure restricted by the analyzer layout, it is easy to pick up each sample.

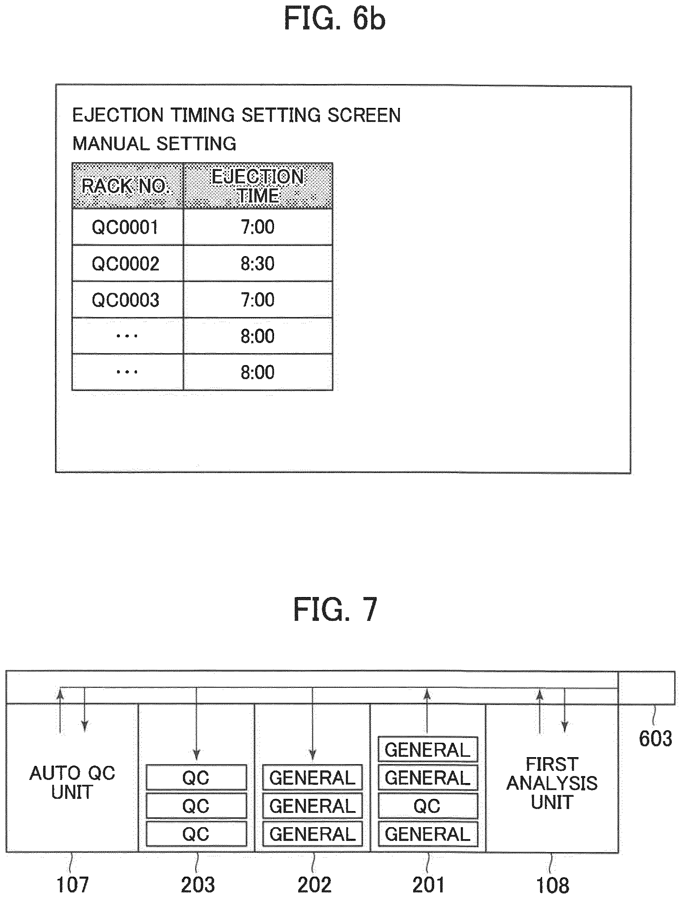

The user can specify the timing to eject a sample as appropriate through the control unit 105. Fig. 6a is an example of the sample ejection timing setting screen and Fig. 6b is an example of the manual setting screen for ejection timing.

On the ejection timing setting screen shown in Fig. 6a, the ejection timing can be selected using several radio buttons. For example, when the QC sample preference button 501 is selected, the mode to eject the QC sample prior to the general sample becomes effective. Similarly, when the general sample preference button 502 is selected, the mode to eject the general sample prior to the QC sample becomes effective. When the NOT SPECIFIED button 503 is selected, samples are ejected in the order of completion of measurement or in random order. When the manual setting button 504 is selected, the manual setting screen shown in Fig. 6b appears and the user can specify the ejection time for each sample. Instead of specifying the ejection time for each sample, the order of ejection may be specified.

### Third Embodiment

Next, the third embodiment will be described referring to Fig. 7. Fig. 7 is a schematic diagram of the automatic analyzer 111 according to the third embodiment. Basically, the first embodiment uses the first ejection line 202 and second ejection line 203 for the own automatic analyzer as the destination of ejection of the QC sample to be transported to another automatic analyzer, as appropriate. On the other hand, in the third embodiment, the first ejection line 202 and second ejection line 203 are used as ejection lines for general samples (general sample ejection units) and an ejection unit 603 for another analyzer is separately provided as an exclusive line for transportation to the other automatic analyzer or transportation from the other automatic analyzer. According to this embodiment, the task to pick up a QC sample for the automatic analyzer 112 or automatic analyzer 113 is easier.

### Fourth Embodiment

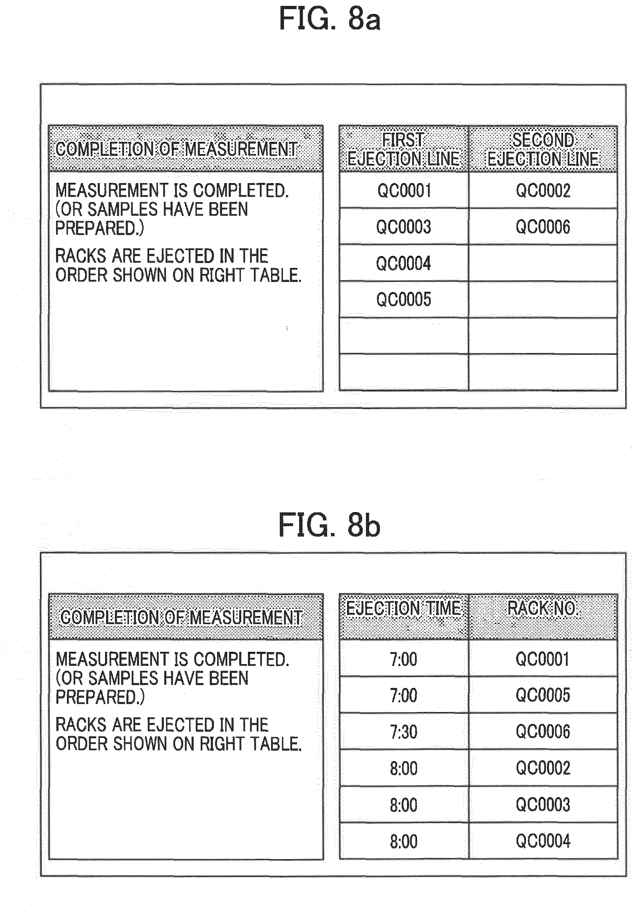

Next, the fourth embodiment will be described referring to Fig. 8a and Fig. 8b. Fig. 8a is an example of the screen that notifies of completion of measurement of samples and the lines to which the samples are ejected. As shown in Fig. 8a, when measurement of samples is completed, the display unit of the control unit 105 or the auto QC unit 107 outputs a measurement completion message and information about which ejection line will be used to eject each sample. By checking this screen, the user can know where the sample which the user wants to pick up is ejected.

Fig. 8b is an example of the screen that notifies of completion of measurement of samples and the time to eject samples. When samples are ejected to the same ejection line in different time slots, information that shows which sample is ejected in each time slot is indicated on the display unit as shown in Fig. 8b. By checking this screen, the user can know the timing to eject the sample which the user wants to pick up.

### Fifth Embodiment

In the fifth embodiment, the automatic analyzer 111 detects whether the sample ejected to the ejection line has been actually picked up. The user may pick up the sample or the autonomous moving body or automatic transportation device may pick up the sample.

As the method of detecting that the sample has been picked up, for example, a barcode reader capable of reading the sample rack number may be installed at the end of the lane of the ejection line. Alternatively, the fact that the sample rack has been pulled out from the end of the lane of the ejection line may be physically detected. As one example of the physical detection method, a movement of a spring or lever, or the use of an infrared ray sensor may be conceived. Even if it is detected physically, the sample racks placed on the lane are grasped by software of the automatic analyzer 111, so which rack has been picked up is known.

### Sixth Embodiment

In the sixth embodiment, the autonomous moving body 102 provided with an auto QC unit transports a QC sample to the automatic analyzer 112 that is not provided with an auto QC unit or the like. The autonomous moving body 102 in this embodiment not only accesses the ejection line of the automatic analyzer 111 to picks up the QC sample, then automatically moves and inputs the QC sample into the automatic analyzer 112 or the automatic analyzer 113, but also can transport the QC sample previously stored in its cooling box and input it into the automatic analyzer 112 or the like.

### Seventh Embodiment

In the seventh embodiment, the automatic analyzer includes a charger unit capable of charging the battery of the autonomous moving body 102. This eliminates the need to provide, in the automatic analysis area 101a, special space for a charging port, etc. for the autonomous moving body 102. The charging unit may be installed in any automatic analyzer.

### Eighth Embodiment

In the eighth embodiment, security and hardware safety in access to the ejection line of the automatic analyzer 111 are improved. For example, if the shape of the joint of the automatic analyzer 111 does not agree with that of the autonomous moving body 102, they cannot be physically connected. Alternatively, only the autonomous moving body 102 that has been authenticated can be connected by using a shutter that can be unlocked by a mechanical key or an electronic key. If the operator accesses the automatic analyzer 111, authentication may be done by using an IC card that stores the operator's unique ID, or by a passcode.

### Ninth Embodiment

In the ninth embodiment, regarding the QC samples prepared in the auto QC unit 107 of the automatic analyzer 111, the form of the container (lid, bottle, etc.) and the opening method are previously recognized and recorded for each type of sample. Consequently, simply by inserting an unopened sample into the automatic analyzer 111, the sample can be prepared and stored. For example, the method of recognizing the form of the container may be 3D scanning or the like.

### Tenth Embodiment

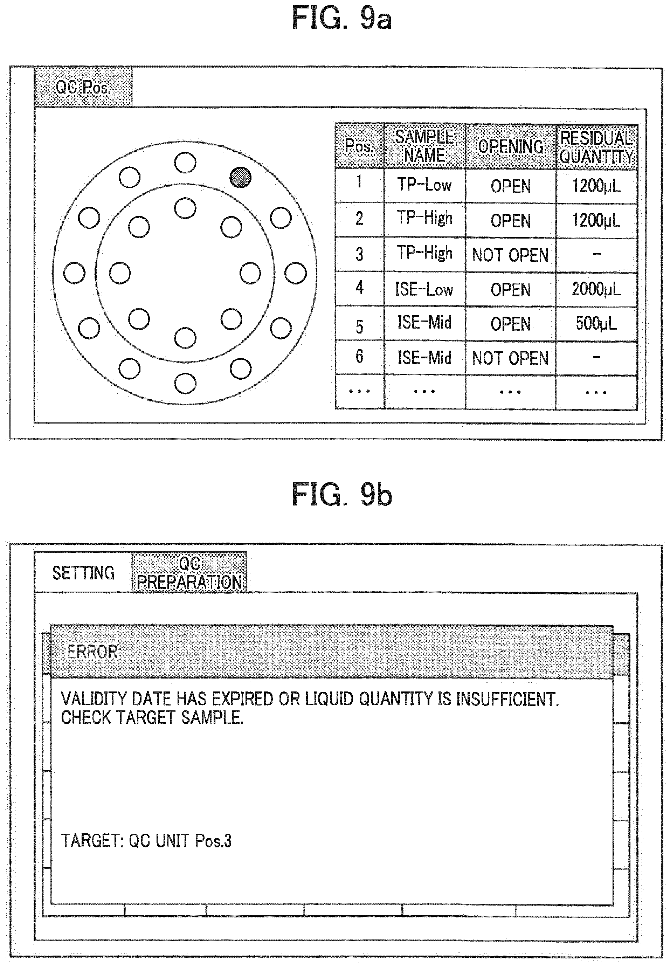

Next, the tenth embodiment will be described referring to Fig. 9a and Fig. 9b. Fig. 9a is an example of the screen that shows the sample storage position in the auto QC unit 107. As shown in Fig. 9a, the residual quantity and opening state of each sample prepared and stored in the auto QC unit 107 are displayed, which can aid the user in stock management of samples. The residual quantity and opening state of samples can be determined by detecting the liquid level or checking for foreign substances using an infrared ray sensor or liquid level sensor.

Fig. 9b is an example of the error warning screen. If the samples in the auto QC unit 107 include samples whose validity date has expired or whose residual quantity is insufficient, an error message as shown in Fig. 9b is given. At this time, the sample as the error target and its position are also indicated. If the sample which should be a liquid contains a solid substance, a warning may be given of the possibility that it may contain a foreign substance. If the possibility of a foreign substance is suggested, restirring may be automatically performed.

### Eleventh Embodiment

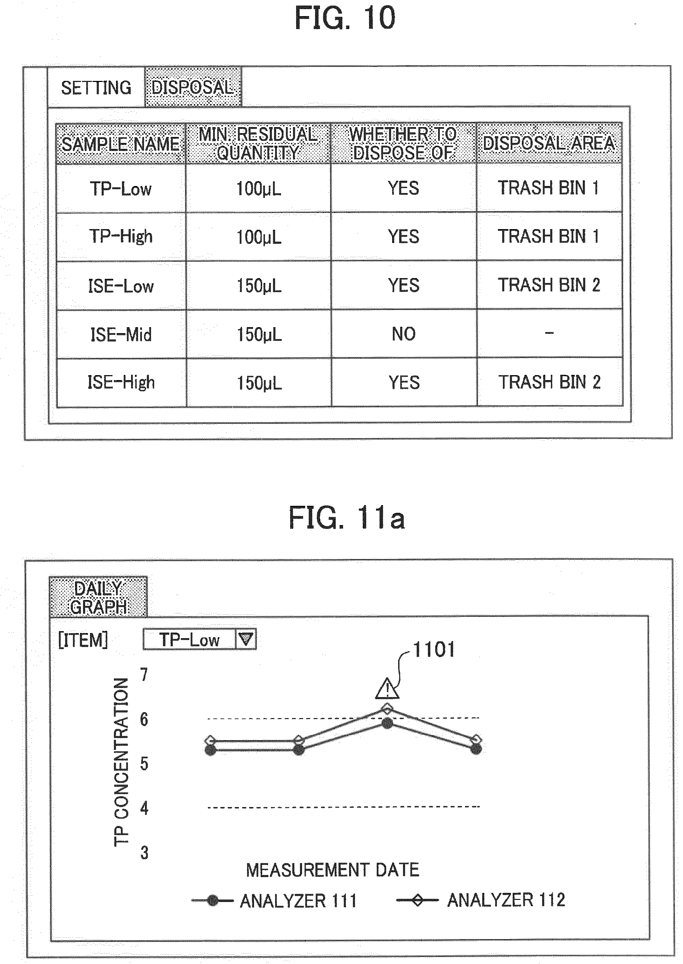

Next, the eleventh embodiment will be described referring to Fig. 10. Fig. 10 is an example of the disposal setting screen for the samples that are stored in the auto QC unit 107. As shown in Fig. 10, the minimum residual quantity, whether to dispose of, and the disposal area can be specified. The minimum reference residual quantity is the reference quantity used to decide that the sample whose residual quantity is below this minimum quantity should be disposed of. If the automatic disposal function of the automatic analyzer is set to ON, "WHETHER TO DISPOSE OF" is set to "YES". Disposal may be performed not only by the user but also by the autonomous moving body such as a robot, or the automatic analyzer may dispose of samples in an attached trash bin by itself. As for "DISPOSAL AREA", if there are a plurality of candidates, where to dispose of can be selected.

The settings for disposal are previously made by the user and stored in the memory of the control unit 105, and the settings once made can be altered later. In addition, the method of disposal may be set according to the type of trash such as biological sample trash or plastic trash. After disposal, the date of disposal, the disposal method and the quantity of remaining samples in stock may be recorded or displayed.

### Twelfth Embodiment

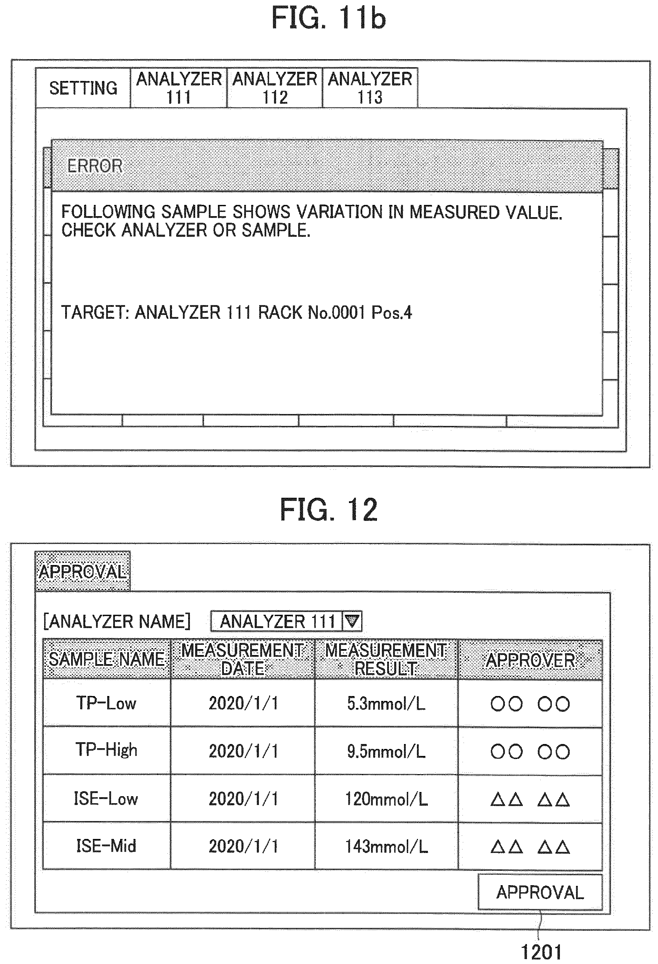

Next, the twelfth embodiment will be described referring to Fig. 11a and Fig. 11b. Fig. 11a is a graph that shows measurement results of the sample used in a plurality of automatic analyzers. If the same QC sample is used for measurement in a plurality of automatic analyzers, these measurement results are integrated and indicated in the form of a graph as shown in Fig. 11a. Specifically, graphs indicating the measurement result on each day of measurement in each automatic analyzer are displayed side by side so that the measurement results of the automatic analyzers can be easily compared with one another. If a plurality of QC samples are used, a graph is displayed for each QC sample. This makes it possible to identify the reason for variation in the measured value; for example, if all the analyzers show the same tendency of variation, the variation may be caused by an environmental factor or caused by the sample, or if a certain analyzer shows a different tendency of variation, the variation may be caused by the analyzer itself.

Fig. 11b is an example of the screen that informs of variation in the measured value. If the measured value has varied beyond a preset variation range, a measured value variation message is displayed as shown in Fig. 11b and a warning is given to the user. At this time, a measured value variation mark 1101 may be made to appear on the graph as shown in Fig. 11a. An example of the preset variation range is the average value ± 2SD (standard deviation). If measurement or a measured value is abnormal, for example, a measurement result cannot be obtained or the measurement result is beyond the preset variation range, the mode to make remeasurement automatically may be available so that the user can select the mode as necessary through the control unit 105. If remeasurement is made automatically, it is desirable to limit the number of times of remeasurement to a preset number of times.

### Thirteenth Embodiment

Next, the thirteenth embodiment will be described referring to Fig. 12. Fig. 12 is an example of the approval screen that shows the measurement results of each automatic analyzer. As shown in Fig. 10, information including the sample name, measurement date, measurement result, and approver is displayed and when the APPROVE button 1201 is pressed after entering a comment, etc. as necessary, the approval is recorded.

The present invention is not limited to the abovementioned embodiments and includes various modifications. For example, the automatic analyzer 112 or automatic analyzer 113 may not have the function of sample preparation and may include a storage unit having only a storage function. Furthermore, the above automatic analysis system includes two automatic analyzers without an auto QC unit. However, the number of such analyzers is not limited to two. Furthermore, the automatic analyzer without an auto QC unit is not limited to a compact analyzer.

The embodiments described above have been described in detail to simply describe the present invention, and are not necessarily required to include all the described configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### List of Reference Signs

101: automatic analysis area,
102: autonomous moving body,
103: first analysis unit,
104: second analysis unit,
105: control unit,
106: input/ejection unit,
107: auto QC unit,
108: fist analysis unit,
109: equipment shelves
110: working table,
111, 112, 113: automatic analyzer,
115, 116: control unit,
117, 118: analysis unit,
201: sample input unit,
202: first ejection line,
203: second ejection line,
301: first ejection line preference button,
302: second ejection line preference button,
303: NOT SPECIFIED button,
304: manual setting button
401: ejection line,
501: QC sample preference button,
502: general sample preference button,
503: NOT SPECIFIED button,
504: manual setting button,
603: other analyzer ejection unit,
1101: measured value variation mark,
1201: APPROVE button

## Claims

1. An automatic analysis system comprising:
a first automatic analyzer provided with a storage unit for storing a sample used for calibration or quality control; and
a second automatic analyzer, wherein
the first automatic analyzer includes: a first analysis unit which performs analysis using the sample stored in the storage unit; and an ejection unit which ejects the sample stored in the storage unit, and
the second automatic analyzer includes a second analysis unit which performs analysis using the sample ejected by the ejection unit.

2. The automatic analysis system according to Claim 1, wherein
the ejection unit includes a plurality of ejection lines, and
the first automatic analyzer includes a display unit which displays to which ejection line that the sample is ejected.

3. The automatic analysis system according to Claim 2, wherein when analysis of the sample is completed, the display unit displays the ejection line to which the sample is ejected.

4. The automatic analysis system according to Claim 2, comprising a control unit which sets which ejection line is used for ejection.

5. The automatic analysis system according to Claim 1, wherein the ejection unit includes: a general sample ejection unit which ejects a general sample analyzed by the first analysis unit; and an ejection unit for another analyzer to which a sample to be used for calibration or quality control by the second analysis unit is ejected.

6. The automatic analysis system according to Claim 1, wherein the first automatic analyzer ejects a general sample analyzed by the first analysis unit and a sample to be used for calibration or quality control by the second analysis unit, to the ejection unit at different timings.

7. The automatic analysis system according to Claim 6, wherein the first automatic analyzer includes a display unit which displays a timing to eject the sample when analysis of the sample is completed.

8. The automatic analysis system according to Claim 6, comprising:
a control unit which sets a timing to eject a sample.

9. The automatic analysis system according to Claim 8, comprising:
a control unit which selects a mode to eject a general sample preferentially or a mode to eject a sample to be used for calibration or quality control preferentially.

10. The automatic analysis system according to Claim 1, wherein the storage unit automatically prepares the sample to be usable for calibration or quality control and automatically supplies the prepared sample to the first analysis unit or the ejection unit.

11. The automatic analysis system according to Claim 1, comprising:
an autonomous moving body which transports the sample ejected from the first automatic analyzer to the second automatic analyzer.

12. The automatic analysis system according to Claim 1, comprising:
a plurality of sample storage areas including the storage unit; and
a control unit which sets the sample storage area and a destination of transportation for each sample.

13. The automatic analysis system according to Claim 1, comprising:
a display unit which displays a measurement result of each automatic analyzer side by side when a sample is used for analysis in a plurality of automatic analyzers.

14. The automatic analysis system according to Claim 1, comprising:
a control unit which, if measurement or a measurement result is abnormal, sets a mode to make remeasurement automatically.

15. The automatic analysis system according to Claim 14, wherein, when a measurement result is not obtained, the control unit works to make remeasurement automatically.

16. The automatic analysis system according to Claim 14, wherein, when a measurement result exceeds a prescribed variation range, the control unit works to make remeasurement automatically.

17. The automatic analysis system according to Claim 14, wherein the control unit works to make remeasurement automatically a prescribed number of times.

18. An automatic analyzer comprising:
a storage unit which stores a sample used for calibration or quality control;
an analysis unit which performs analysis using the sample stored in the storage unit; and
an ejection unit which ejects the sample stored in the storage unit and to be used in another automatic analyzer.

19. The automatic analyzer according to Claim 18, wherein
the ejection unit includes a plurality of ejection lines, and
a display unit for displaying to which ejection line that the sample is ejected is further provided.

20. The automatic analyzer according to Claim 18, wherein the ejection unit includes: a general sample ejection unit for ejecting a general sample analyzed by the analysis unit; and an ejection unit for another automatic analyzer which ejects a sample to be used for calibration or quality control by the other automatic analyzer.

21. The automatic analyzer according to Claim 18, wherein a general sample analyzed by the analysis unit and a sample to be used for calibration or quality control by the other automatic analyzer are ejected to the ejection unit at different timings.

22. An automatic analyzer provided with an analysis unit for performing analysis using a sample, wherein
the analysis unit performs calibration or quality control using a sample prepared by an analyzer other than the automatic analyzer.
